# EUROPEAN PATENT APPLICATION

(11) **EP 2 114 035 A1**
(43) Date of publication of application: **04.11.2009**
(21) Application number: 09158986.1
(22) Date of filing: 28.04.2009
(51) Int. Cl.: H04L 12/26, H04L 29/06

(54) **Method, system and apparatus for logging data with low latency**

(30) Priority: 28.04.2008 US 149124
(71) Applicant: Siddiqui, Mohammad Faran, Mississauga, ON L5V 1K4 (CA)
(72) Inventor: Siddiqui, Mohammad Faran, Mississauga, ON L5V 1K4 (CA)
(74) Representative: Wilding, Frances Ward

(57) **Abstract**

A system, method and apparatus for logging data are provided. Network data is acquired in transmission to a destination. The network data is converted to loggable data. The loggable data is output in a machine readable format. As a result, the system, method and apparatus provides for low latency acquisition of data, which may also be used for recoverability.

## Description

### FIELD

The specification relates generally to communication networks, and specifically to a method, system and apparatus for logging data with low latency.

### BACKGROUND

Increasingly, manufacturing plants, processing plants, research centres, service providers and businesses are conducting transactions electronically, with sensitive and critical information being transmitted over communication networks. For example, the financial services industry commonly relies on transmitting buy and sell orders over private communication networks, such as LANs and/or WANs to trading engines and trading gateways, and to matching engines, to conduct trades of securities. Such matching engines attempt to match these orders (i.e. find buyers for sellers and vice versa), and confirm trades by transmitting confirmation messages back through the internet. Similar schemes can operate, for example, in the area of telecommunications, with advanced systems supporting adhoc bandwidth allocation. In this example, the transaction can be a bandwidth sale or swap or partial swap (with some exchange of funds) between telecommunication service providers, with one service provider being the (majority) buyer and the other being the (majority) seller.

In some instances, logging of such transactions is critical to ensuring that commerce proceeds in an orderly fashion, and that the results of transactions be achieved (e.g. buyers receive their stock, and sellers receive their funds). Logging is further important to ensure that the exact circumstances of a transaction are recorded in the event that the transaction needs to be audited, for example in instances where there are questionable circumstances surrounding the transaction, such as insider trading, in the financial services example. Sometimes all electronic data passing through particular computer systems and/or networks are recorded for audit, compliance, and control purposes.

Some firms that conduct transactions electronically require that all electronic devices that process such transactions be equipped with auditing software. Indeed, in some industries, such as the financial service industry, regulatory agencies (e.g. the Securities Exchange Commission) require that such auditing software be installed on all electronic devices within firms that process such transactions. The auditing software, however, can consume significant system resources on each electronic device on which it is installed, and introduce latency in the electronic device. For example, running such auditing software on an electronic device dedicated to trading securities on-line can slow down the rate at which trading occurs, and further introduce latency in the rate at which the trades are reported to an auditing entity.

### SUMMARY

A first aspect of the specification provides a method of logging data. The method comprises acquiring network data in transmission to a destination. The method further comprises converting the network data to loggable data. The method further comprises outputting the loggable data in a machine readable format. As a result, the method provides for low latency acquisition of data, which may also be used for recoverability.

Acquiring the network data may comprise acquiring packet based data. Acquiring the network data may comprise acquiring a copy of the network data. Acquiring the network data may comprise at least one of sniffing the network data and acquiring said network data via a mirror port. The method may further comprise transmitting the network data to an auditing entity prior to converting the network data to the loggable data.

Converting the network data to the loggable data may comprise extracting transaction data from the network data and converting the transaction data to a pre-determined loggable data format. The pre-determined loggable data format may comprise a data format processable by an auditing entity. The auditing entity may comprise at least one of an auditing entity associated with an entity originating the network data, and an auditing entity associated with the financial services industry.

The loggable data may comprise financial transaction data.

Outputting the loggable data in the machine readable format may comprise at least one of saving the loggable data to a computer readable file, and transmitting the loggable data to an auditing entity.

The method may further comprise analyzing the loggable data to adjust an electronic device state.

A second aspect of the specification provides an apparatus for logging data. The apparatus comprises a communication interface enabled for (that is, comprising acquiring means suitable for) acquiring network data in transmission to a destination. The apparatus further comprises a processing unit in communication with the communications interface. The processing unit is enabled for: converting the network data to loggable data; and outputting the loggable data in a machine readable format. As a result, the apparatus provides for low latency acquisition of data, which may also be used for recoverability.

Means for acquiring the network data may comprise means operable to acquire packet based data in use. Acquiring the network data may comprise acquiring a copy of the network data. Acquiring the network data may comprise at least one of sniffing the network data and acquiring said network data via a mirror port. The communications interface may be further enabled for transmitting the network data to an auditing entity prior to converting the network data to the loggable data.

Further, means for converting the network data to the loggable data may comprise means for extracting transaction data from the network data and converting the transaction data to a pre-determined loggable data format. The pre-determined loggable data format may comprise a data format processable by an auditing entity. The auditing entity may comprise at least one of an auditing entity associated with an entity originating the network data, and an auditing entity associated with the financial services industry.

The loggable data may comprise financial transaction data. Means for outputting the loggable data in the machine readable format may comprise at least one of means for saving the loggable data to a computer readable file, and means for transmitting the loggable data to an auditing entity.

The apparatus may further comprise a memory for storing the computer readable file, the memory in communication with the processing unit.

### BRIEF DESCRIPTIONS OF THE DRAWINGS

Embodiments are described with reference to the following figures, in which:

Fig. 1 depicts a system for logging data, according to a non-limiting embodiment;

Fig. 2 depicts an apparatus for logging data, according to a non-limiting embodiment;

Fig. 3 depicts a method for logging data, according to a non-limiting embodiment;

Fig. 4 depicts a system for logging data, according to a non-limiting embodiment;

Fig. 5 depicts a system for logging data, according to a non-limiting embodiment;

Fig. 6 depicts an apparatus for logging data, according to a non-limiting embodiment;

Fig. 7 depicts a system for logging data, according to a non-limiting embodiment;

Fig. 8 a depicts a system for logging data, according to a non-limiting embodiment; and

Fig. 9 depicts a method for adjusting the state of an electronic device, according to a non-limiting embodiment.

### DETAILED DESCRIPTION OF THE EMBODIMENTS

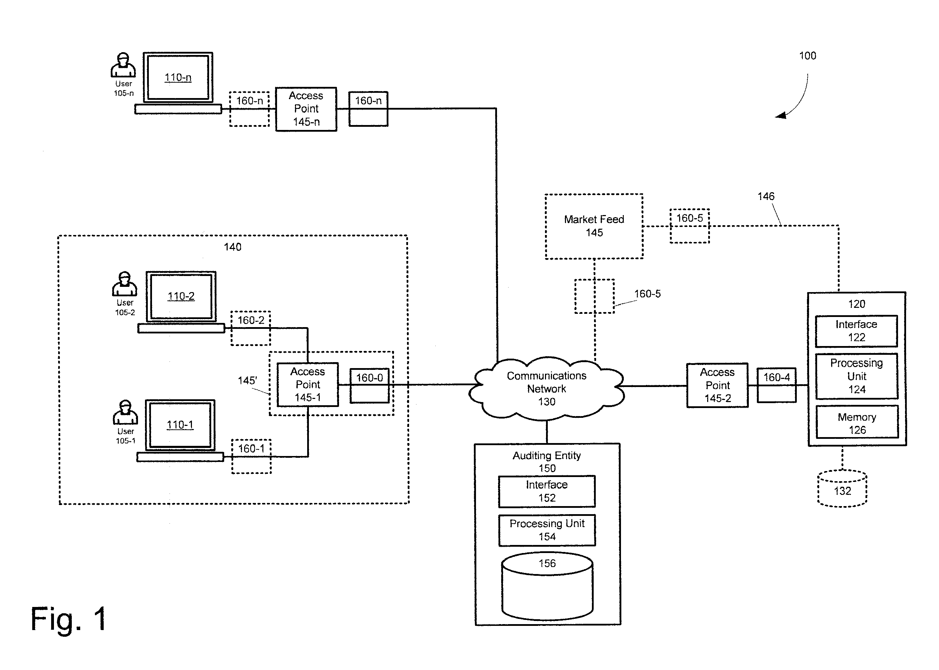

Figure 1 depicts a system 100 for logging data, according to a non-limiting embodiment. System 100 comprises a plurality of electronic devices 110-1, 110-2...100-n (generically referred to herein as "electronic device 110", and collectively as "electronic devices 110"), all of which are connected to a transaction engine 120 via a suitable communication network 130. Further, each electronic device 110-1, 110-2...110-n, may be associated with at least one respective user 105-1, 105-2...105-n (generically referred to herein as "user 105", and collectively as "users 105").

In some embodiments, each electronic device 110 may comprise a computing device having an output device (e.g. a display monitor), and at least one input device (e.g. a keyboard and a mouse), at least one processing unit, volatile memory (e.g. random access memory), persistent memory (e.g. hard disk devices) and network interfaces to enable the electronic device 110 to communicate over the communications network 130. It is understood the electronic device 110 may comprise any suitable type of computing device that enables the user 105 to perform transactions via the communications network 130, including but not limited to a personal computer, a laptop computer, a personal digital assistant, a cell phone, an e-mail paging device etc. Hence, each electronic device 110 will be generally equipped with transaction software that enables the electronic device 110 to initiate transactions and causes the output device to display transaction information in a format understandable to the user 105. Further, each user 105 may generally comprise an employee of a firm that is initiating transactions (e.g. financial transactions) with the transaction engine 120, a user 105 initiating transactions by entering transaction data into the electronic device 110, using the transaction software. In some embodiments, a group of electronic devices 110 may be operated by a plurality of users 105 belonging to one firm: for example, in the depicted embodiment, electronic devices 110-1 and 110-2 belong to a firm 140.

In other embodiments, however, the electronic device 110 may be a rack-mounted server computer where all input/output is done via networking software, as known to one of skill in the art.

In general, the transaction engine 120 comprises any suitable computing device, server and/or mainframe, and/or any other type of suitable computing environment, enabled to accept financial transaction data from the electronic devices 110 via the communications network 130, and process the transaction data. Hence, the transaction engine 120 generally comprises an interface 122 for enabling communications with the communications network 130, at least one processing unit 124 for processing transactions, and at least one memory 126 for storing data associated with transactions. For example, the transaction engine 120 may comprise an HP ProLiant DL585 server running a Linux operating system, from Hewlett-Packard Inc. of Palo Alto, California, and having four central processing units each operating at up to 2.6 GHz, and having up to 160 GB of random access memory. However, it is understood that the HP ProLiant DL585 is merely exemplary, and other suitable types of computing environments for the transaction engine 120 are within the scope of present embodiments.

In a specific non-limiting embodiment, each user 105 may be a trader at a firm engaged in buying and selling securities, and the transaction engine 120 may comprise an electronic stock exchange engine, such an electronic stock exchange engine belonging to the New York Stock Exchange ("NYSE"). Hence, in this embodiment, the transaction engine 120 is enabled to receive and process buy and sell orders, for example from the electronic device 110, including requests to buy, sell and cancel etc., securities that can be traded electronically. In other embodiments, however, each user 105 may comprise an algorithmic trading system - that is an automated trading system processed at each electronic device 110, the automated trading system enabled for sending buy and sell orders to the exchange computers based on triggers received from (for example) quotation systems.

In some embodiments, the transaction engine 120 may also be in communication with at least one market feed 145 enabling the transaction engine 120 to access best bid-offers ("BBO") for any given security being traded using the system 100. For example, the transaction engine 120 is enabled to determine if any buy order and/or sell order for a given security would match an outstanding BBO as indicated by the at least one market feed 145. In some embodiments, the transaction engine 120 is in communication with the at least one market feed 145 via the communications network 130, while in other embodiments, the transaction engine 120 is in direct communication with the at least one market feed 145 (e.g. via connection 146).

In some non-limiting embodiments, the transaction engine 120 may be in communication with a database 132 for storing loggable data associated with the transaction engine 120, as described below. In some embodiments, the database 132 may be local to the transaction engine 120 (as depicted), while in other embodiments, the database 132 may be remote from the transaction engine 120, the transaction engine 120 and the database 132 being in communication via the communications network 130.

The communications network 130 generally comprises any suitable communications network, or combination of communications networks, for conveying transaction data, and can be wired, wireless or combinations thereof. The communications network 130 may further be based upon any suitable network architecture and/or platform (e.g. the internet, a local area network (LAN), a wide area network (WAN), a cell-phone network, a WiFi network, a WiMax network, and/or combinations thereof), or combinations thereof. Within the financial services industry, the communications network 130 may generally comprise at least one private communication network.

In turn, the electronic devices 110 and the transaction engine 120 are generally enabled to transmit communications in a format suitable for the communications network 130. In particular, the electronic devices 110 and the transaction engine 120 are enabled to process transaction data into a network data format that is suitable for transmission over the communications network 130, and further enabled to extract transaction data from network data by processing the network data received via the communications network 130.

In some embodiments, all communications between the firm 140 and the communications network 130 may be mediated by an access point 145-1. For example, the access point 145-1 may comprise a suitable modem, such as an Ethernet modem, a wireless modem or a combination, or a computing device comprising a suitable modem. In these embodiments, all network data associated with the firm 140, including transaction data transmitted by the electronic devices 110 associated with the firm 140 (i.e. electronic device 110-1 and 110-2), or network data received from the communication network 130, passes through the access point 145-1.

Similarly, communications between the transaction engine 120 and the communications network 130 may be mediated by an access point 145-2. In embodiments, where a firm comprises a single electronic device 110, such as electronic device 110-n, communications between the electronic device 110-n and the communications network 130 may similarly be mediated by an access point 145-n.

The system 100 may also comprise an auditing entity 150 for receiving and processing loggable data, the auditing entity 150 in communication with the electronic devices 110 and/or the transaction engine 120 via the communications network 130. It is understood that loggable data comprises transaction data that has been processed into a format that is, in turn, processable by the auditing entity 150, as described below. Hence, the auditing entity 150 is generally enabled to audit the transactions initiated at the electronic devices 110 by receiving loggable data, and processing the loggable data to extract and analyze transaction data. The auditing entity 150 hence generally comprises an interface 152 for enabling communications with the communications network 130, at least one processing unit 154 for processing loggable data, and at least one memory 156 for storing loggable data. Loggable data stored at the auditing entity 150 may be processed by the auditing entity 150, for example to perform an audit of transactions associated with the firm 140, or a particular user 105.

In some embodiments, the auditing entity 150 may be generally connected to the access point 145, either directly or via a private communication network associated with a firm 140 (e.g. a LAN). In some embodiments, the access point 145 (and/or an access point 145', described below) may comprise the auditing entity 150. In some of these embodiments the system 100 may comprise a plurality of auditing entities similar to the auditing entity 150, each of the plurality of auditing entities attached to each access point 145. Alternatively, the system 100 may comprise a plurality of auditing entities, one for each firm 140.

In prior art scenarios, each of the electronic devices 110 are equipped with auditing software which collects the transaction data as it is generated and/or received at the electronic device 110, and subsequently converts the transaction data to loggable data prior to transmitting the loggable data to the auditing entity 150 via the communications network 130. It is further understood that in some instances the auditing entity 150 may be associated with a regulatory body, such as the Securities Exchange Commission ("SEC"), which may impose very specific requirements on the format of the loggable data. For example, the SEC requires that firms (such as the firm 140) that are broker/dealers report transactions to an Order Audit Trail System ("OATS") developed by the Financial Industry Regulatory Authority ("FINRA"), in a pre-defined format, and within a predefined time period. Hence, such firms generally install software on all electronic devices 110 associated with the firm that are involved in transactions that enable the electronic devices 110 to report transactions in the form of loggable data in a specific, pre-determined format acceptable for OATS. In some embodiments, the pre-determined format may also be dependent on the type of security being traded, and the specific stock exchange at which the transaction is to occur.

However, as has been described above, the installation of such auditing software on an electronic device 110 introduces latency into transactions, as the auditing software consumes a portion of the system resources of the electronic device 110. Further, in scenarios where a real-time feed of loggable data is desired between an electronic device 110 and the auditing entity 150, the transactions which are occurring via the electronic device 110 may in turn introduce latency into the real-time feed due to sharing of system resources of the electronic device 110 between the auditing software and transaction software.

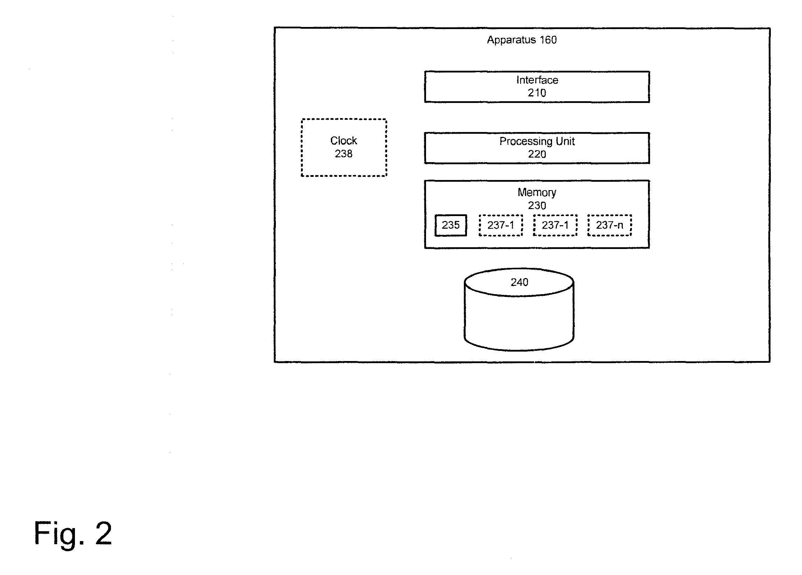

In contrast, the system 100 comprises at least one apparatus 160-0, 161-1...161-n (generically referred to herein as "apparatus 160", and collectively as "apparatuses 160"), described below with reference to Figure 2, the apparatus 160 for acquiring network data, converting network data to loggable data, and outputting loggable data in a machine readable format. For example, in one non-limiting embodiment, an apparatus 160-0 is enabled to acquire network data being exchanged between the access point 145-1 associated with the firm 140 and the communications network 130, such that all network data being exchanged between each electronic device 110 associated with the firm 140 (e.g. the electronic devices 110-1 and 110-2) is acquired by the apparatus 160-0. In another non-limiting embodiment, the system 100 comprises a plurality of apparatuses 160, each of the plurality of apparatuses 160 being associated with an electronic device 110, such that each apparatus 160 is enabled to acquire network data being exchanged between the associated electronic device 110 and the communications network 130. For example, in the depicted embodiment, the electronic device 110-1 is associated with the apparatus 160-1, the electronic device 110-2 is associated with the apparatus 160-2, and the electronic device 110-n is associated with the apparatus 160-n. In embodiments where there is only one electronic device 110 associated with a given access point 145 (e.g. electronic device 110-n and access point 145-n), the associated apparatus 160 may be located between the access point 145 and the electronic device 110, or between the access point 145 and the communications network 130, as desired (e.g. access point 160-n).

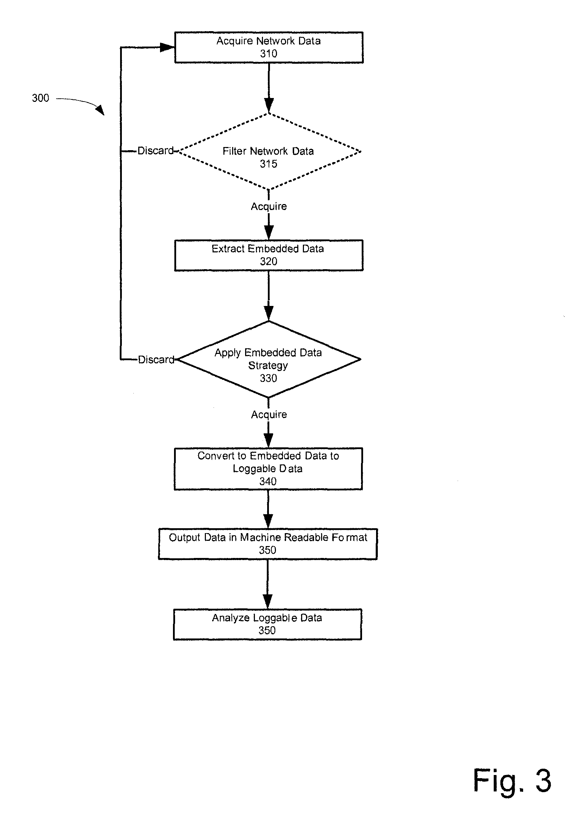

Attention is now directed to Figure 2, which depicts a non-limiting embodiment of the apparatus 160, comprising an interface 160 for acquiring network data, a processing unit 220 for processing network data to convert network data into loggable data, and a memory 230 for storing at least an application 235 for enabling the processing unit 220 to convert network data into loggable data, when said processing unit 220 processes the application 235. Further functionality of the apparatus 160 will be described below with reference to Figure 3.

In some embodiments, the memory 230 further comprises at least one strategy module 237-1, 237-2...237-n, (generically referred to herein as "strategy module 237", and collectively as "strategy modules 237") for storing filtering and/or message handling strategies that may be applied to network data and/or loggable data. Each strategy module generally comprises an algorithm for making decisions on filtering and/or message handling in accordance with the filtering and/or message handling strategies. Each strategy module 237 may be provisioned by an administrator of the apparatus 160 for carrying out a desired strategy, such as those described below. Furthermore, the strategy may be updated by updating a strategy module 237. For example, a strategy module 237 may be updated by accessing the apparatus 160 via a graphical user interface (GUI, not depicted) to change parameters stored at the strategy module. The nature of such parameters will be described below. Alternatively, a strategy module 237 may be updated by transmitting updated parameters to the apparatus 160, the apparatus enabled to process the updated parameters and update the strategy module 237. In yet another alternative, the strategy module 237 may be updated by transmitting an updated strategy module 237 to the apparatus 160, the apparatus 160 enabled to replace the strategy module 237 with the updated strategy module 237. Strategy may be updated at a plurality of apparatuses 160 via transmission of updated parameters and/or updated strategy modules 237, which may be particularly desirable if a single administrator is administrating each of the plurality of apparatuses 160.

The interface 210 generally comprises a communications interface that enables the apparatus 160 to acquire network data as the network data is being transmitted between an electronic device 110 (and/or the transaction engine 120, or any other suitable electronic device (e.g. a computing device and/or a communications device) and the communications network 130, without introducing significant latency into the transmission of the network data. In some embodiments, the apparatus 160 is enabled to acquire a copy of the network data. In other embodiments, the apparatus is enabled to acquire a copy of at least a portion of the network data. In some embodiments, the apparatus 160 is further enabled to log network data, for example by saving the network data to the memory 230, or an optional database 240.

In a specific non-limiting embodiment, the apparatus 160 comprises a packet sniffer (sometimes known as a network sniffer or a protocol analyzer, or for a particular type of communication networks, an Ethernet sniffer or a wireless sniffer) enabled to monitor network data. In general, packet sniffers are known to persons of skill in the art of computer networks, and any suitable packet sniffer is within the scope of present embodiments.

However, embodiments are not to be particularly limited to packet sniffers, and other apparatus for acquiring network data as the network data is being transmitted between an electronic device 110 and a communications network will occur to a person of skill in the art.

In a particular non-limiting embodiment, the interface 210 comprises a switch, or a hub, including a monitoring port enabled to mirror all network data passing through all ports, or particular ports, on the switch. Hence, network data may be acquired by connecting a suitable monitoring device (such as the apparatus 160), to the monitoring port.

In operation, the interface 210 accepts and transmits all network data that is being exchanged between the electronic devices 110 and the communications network 130, but acquires at least a copy of all the network data that is being exchanged. In other words, the apparatus 160 is enabled to capture the raw feed of network data exchanged between the electronic device 110 and the communication network 130. The network data is then passed to the processing unit 220 for conversion to loggable data, described below with reference to Figure 3. However, in embodiments, where the network data is first logged by saving the network data to the memory 230 or the optional database 240, the processing unit 220 may be further enabled to retrieve the saved network data from the memory 230 or the optional database 240 prior to converting the network data to loggable data.

In some embodiments, the apparatus 160 is enabled to output the loggable data in a machine readable format by transmitting the loggable data in a machine readable format to the auditing entity 150, for example via interface 210 and the communications network 130. In other embodiments the apparatus 160 is enabled to output the loggable data in a machine readable format by saving the loggable data to the memory 230 or the optional database 240. In these embodiments, the loggable data may be retrieved at any convenient time by reading the loggable data from the memory 230 or the optional database 240.

In some embodiments, the apparatus 160 further comprises a clock 238 which maintains the current date and time. In some of these embodiments, the apparatus 160 may be enabled to check the date and time that is being maintained at the clock 238 with the date and time of a reference clock (not depicted) that is in communication with the apparatus 160 via the communications network 130, for example by requesting the current date and time from the reference clock via the interface 210.

In some non-limiting embodiments, the functionality of the apparatus 160 may be incorporated into the access point 145, for example in an expanded functionality access point 145' (depicted in Figure 1). In these embodiments, the access point 145 and the apparatus 160 may share resources as long as no substantial latency is introduced into transmission of network data. For example, the expanded functionality access point 145' may comprise an interface, a processor, a memory and an optional database, none of which are explicitly dedicated to the functionality of the access point 145 or the apparatus 160. Indeed, in these embodiments, the functionality of the apparatus 160 may be incorporated into the expanded functionality access point 145' by storing the application 235 in a memory of the access point 145, and enabling an interface of the access point 145 to sniff network data passing through the access point 145.

Attention is now directed to Figure 3 which depicts a non-limiting embodiment of a method 300 for logging data. In order to assist in the explanation of the method 300, it will be assumed that the method 300 is performed using the system 100. Furthermore, the following discussion of the method 300 will lead to a further understanding of the system 100 and its various components. However, it is to be understood that the system 100 and/or the method 300 can be varied, and need not work exactly as discussed herein in conjunction with each other, and that such variations are within the scope of present embodiments.

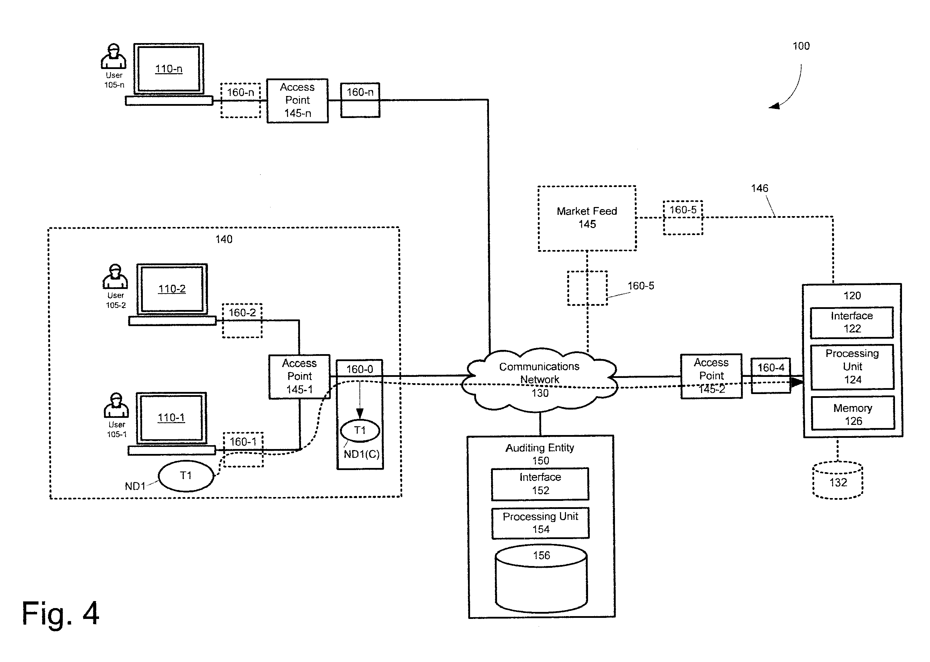

Beginning at step 310, network data is acquired at an apparatus 160 in a manner that does not substantially interfere with the transmission of the network data to a destination address. For example, as represented in Figure 4, which is substantially similar to Figure 1 with like elements depicted with like numbers, the user 105-1 may initiate a transaction comprising transaction data T1, and the electronic device 110-1, transmits the transaction data T1 to the transaction engine 120 by converting the transaction data T1 to network data ND1. Table 1 shows an exemplary structure and contents of the transaction data T1:

**Table 1**

| Field Number | Field Name | Example Contents |
|---|---|---|
| 1 | Firm | Firm 140 |
| 2 | Security Name | XYZ Co. |
| 3 | Transaction Type | Buy |
| 4 | Quantity | 30,000 Units |
| 5 | Price Per Unit | $4.00 |
| 6 | Trader Identifier | ABC123 |

In particular, Field 1 of Table I, named "Firm" identifies that the originating firm of the transaction data T1 is firm 140, and thereby indicates that firm 140 wishes to match one or more orders associated with the transaction data with corresponding orders at the transaction engine 120. Field 2 of Table I, named "Security Name" identifies the name of the specific security that is the subject of the transaction data T1--in this example, "XYZ Co.". Field 3 of Table I, named "Transaction Type" identifies whether the intent is intent to buy, sell, etc. the security identified in Field 2. In this example, the Transaction Type is "Buy", indicating that there is an intent to trade with corresponding orders to sell (Other Transaction Types could include short selling, etc.). Field 4 of Table I, named "Quantity" identifies the desired quantity of the security--in the present example, the Quantity is "40,000 units", indicating that the intention is to Buy 40,000 units of XYZ Co. Field 5 of Table I, named "Price per unit" indicates the desired limit price at which the security is to be traded. In the present example, the Price per Unit is $4.00. (Price per unit could also simply indicate "market" indicating that the price will be paid according whatever price is indicated on market feed 145.). Some embodiments of the Table T1 may also comprise a Field 6, named "Trader Identifier", which indicates an identifier of the user 105-1. In the present example, the Trader Identifier is an alphanumeric identifier of the user 105-1, "ABC123", which may for example represent a license number of the user 105-1 (e.g. a license to conduct trades on via the transaction engine 120). In other embodiments, the Trader Identifier may comprise a name of the user 105-1, an employee number of the user 105-1, and/or e-mail address of the user 105-1. In yet further embodiments, the Table T1 may comprise an identifier of the electronic device 110. In yet further embodiments, the Table T1 may further comprise the date and time that the transaction represented by the Table T1 was initiated.

In any event, the electronic device 110 converts the transaction data T1 to network data ND1, suitable for transmission to the transaction engine 120. For example, the electronic device 110 may convert the transaction data T1 into at least one packet, and add a suitable header to the at least one packet, the suitable header comprising, for example, a network address of the transaction engine 120, and other data which enables the transaction engine to extract the transaction data T1 from the at least one packet once the network data ND1 is received. Table 2 shows an exemplary structure and contents of the network data ND1:

**Table 2**

| Field Number | Field Name | Example Contents |
|---|---|---|
| 1 | Destination Network Address | 192.72.163.7 |
| 2 | Origin Network Address | 192.72.184.6 |
| 3 | Embedded Data | T1 |

In particular, Field 1 of Table 2, named "Destination Network Address" identifies the destination of the network data ND1, in the form of an internet protocol address of the transaction engine 120, and thereby indicates to elements of the communications network 130 that the network data ND1 is to be transmitted to the transaction engine 120. Field 2 of Table 2, named "Origin Network Address" identifies the origin of the network data ND1, in the form of an internet protocol address of either the firm 140 (e.g. the access point 145-1) or the electronic device 110. Together, Field 1 and Field 2 of the network data ND1 may comprise the header data. Field 3 of Table 2, named "Embedded Data" identifies that data has been embedded in the network data ND1. In this embodiment, the "Embedded Data" comprises the Table T1 described above. In other embodiments, the network data ND1 may comprise other fields, for example a packet identification number which identifies the network data ND1 as belonging to a specific group of packets that are to be reconstructed at the destination. In yet further embodiments, the Table T2 may further comprise the date and time that the network data ND1 represented by the Table T2 was created and/or transmitted.

As has been described above, once the network data ND1 is transmitted, the network data ND1 may be acquired at the apparatus 160 (for example the apparatus 160-0 as the network data ND1 passes through the access point 145-1) in a manner that does not substantially interfere with the transmission of the network data to a destination address (e.g. the transaction engine 120), for example by sniffing packets that pass through the access point 145-1 and/or the apparatus 160-0. Hence, the network data ND1 is acquired at the apparatus 160 in the form of a copy ND1(C) of the network data ND 1, and the network data ND1 travels on to the transaction engine 120 (where the transaction data T1 is extracted). Hence the copy of the network data ND1(C) is acquired with little to no latency introduced into the electronic device 110 and/or the access point 145-1 and/or the transaction engine 120.

At an optional step 315, the copy of the network data ND1(C) is processed to filter the network data ND1 by processing the copy of network data ND1(C) in conjunction with a strategy module 237 stored at the memory 230.

For example, the strategy module 237 may comprises a strategy to filter the network data ND1 based on the header: as the apparatus 160 is enabled to capture all network data that is being exchanged with the communications network 130, not all of the network data may contain transaction data. For example, in some instances, a user 105 may simply be using an electronic device 110 to send an e-mail to a client, a relative, or a colleague, etc., and hence there may be no need to log and subsequently audit the e-mail data embedded in the network data. In other instances, a user 105 may be requesting a webpage for viewing on a web browser, and again there may be no need to log and subsequently audit the request data embedded in the network data. Furthermore, there may be electronic devices within a firm that are not associated with transactions, for example an electronic device operated by support personnel within the firm. Hence, once again there may be no need to log and subsequently audit data embedded in network data associated with such electronic devices.

Consequently, at optional step 315, the copy of the network data ND1(C) may be processed to determine if the network data ND1 is associated with a transaction, for example by processing the header of the network data ND1 to determine if the network data ND1 is destined for (or originated from) the transaction engine 120 and/or if the network data ND1 originates from (or is destined for) an electronic device 110 associated with conducting transactions. Hence, in these embodiments the apparatus 160 has access to the network address of the transaction engine 120 and/or the network address of the electronic devices 110 that are being monitored by the apparatus 160, such that the header of the network data ND1 can be processed to determine if the header comprises at least one of the these network addresses. The network address of the transaction engine 120 and/or the network address of the electronic devices 110 that are being monitored by the apparatus 160 may be stored in a strategy module 237 as strategy parameters, during a provisioning process as described above.

However, other filtering strategies may be applied at step 315 to filter the network data 315. For example, it may be desired to acquire all communications from a given user 105 and/or all communications between a given user 105 and another user (e.g. a client, an administrator of the transaction engine 120, another user 105, etc.). Hence, in these embodiments, a strategy module 237 may comprise a network identifier of the given user 105 and/or another user, and the network data ND1 is filtered based on the absence or presence of the network identifier in the network data ND1. Non-limiting examples of a network identifier include, but are not limited to, an e-mail address of a user, an IP address of an electronic device associated with a user and/or a combination.

In embodiments that include step 315, if the network data ND1 is to be discarded (e.g. the network address of the transaction engine 120 and/or an electronic device is not present in the header), then the copy of the network data ND1(C) is discarded and the apparatus 160 returns to step 310 to continue acquiring network data.

However, if it is determined that the network data ND1 is be acquired (e.g. the network address of the transaction engine 120 and/or an electronic device is present in the header), or alternatively if optional step 315 is not performed, at step 320 the copy of the network data ND1(C) is processed to extract data embedded within the network data. As is understood by a person of skill in the art, network data ND1 is generally transmitted in a specific format, for example as in Table 2.

Hence, the apparatus 160 is configured to extract the embedded data from the network data ND1 (i.e. the copy of the network data ND1(C)) based on the specific format, in a manner similar to how the transaction engine 120 and/or an electronic device 110 would extract the embedded data upon receipt of the network data ND 1, as understood by a person of skill in the art.

At step 330, an embedded data strategy is applied to the embedded data extracted at step 320. The embedded data strategy may be stored in one or more strategy modules 137. In general, the embedded data strategy will enable the apparatus 160 to determine if the embedded data is to be discarded or converted to loggable data (e.g. at step 340 described below).

In one non-limiting embodiment, the embedded data strategy comprises a pre-determined format of transaction data. In these embodiments, at step 330, the embedded data is processed to determine if the embedded data comprises transaction data, for example transaction data T1, by comparing the embedded data to the pre-determined transaction data format. For example, it may be understood that any transaction data that is being exchanged with the transaction engine 120 may be in the pre-determined transaction data format, processable by the transaction engine 120, in order to successfully conduct transactions. Hence, the apparatus 160 may be configured to compare embedded data extracted at step 330 with the pre-determined transaction data format to determine whether the embedded data comprises transaction data. If not, then the copy of the network data ND1(C), and the embedded data is discarded, and the apparatus 160 returns to step 310 to continue acquiring network data.

However, in some embodiments, it may be desired to acquire embedded data that is exchanged between the electronic device 110 and the transaction engine 120, where the embedded data does not specifically comprise transaction data. For example, a user 105 may transmit a communication to the transaction engine 120 intended for an administrator of the transaction engine 120, which may be relevant to transaction, but does not specifically comprise transaction data. An embedded data strategy module may instruct to the apparatus 160 to acquire all such communications, discard all such communications, or acquire a portion of such communications. For example, it may be desired to acquire all communications from a given user 105 and/or all communications between a given user 105 and another user (e.g. a client, an administrator of the transaction engine 120, another user 105, etc.). Hence, in these embodiments, an embedded data strategy module 237 may comprise an identifier of the given user 105 and/or another user, and the embedded data is filtered based on the absence or presence of the identifier in the embedded data. Non-limiting examples of a network identifier include, but are not limited to, an e-mail address of a user, an IP address of an electronic device associated with a user, a name of a user, a nickname of a user, initials of a user, an employee number, a trading licences number etc., and/or a combination.

For example, in some of these embodiments, it may be desired to acquire all communications that originate from a specific given user who may be engaging in questionable transactions. Hence a strategy module 237 (or strategy modules 237) may be configured by an administrator of the apparatus 160 to instruct the apparatus to acquire communications to and/or from the specific given user, such that the communications can be audited.

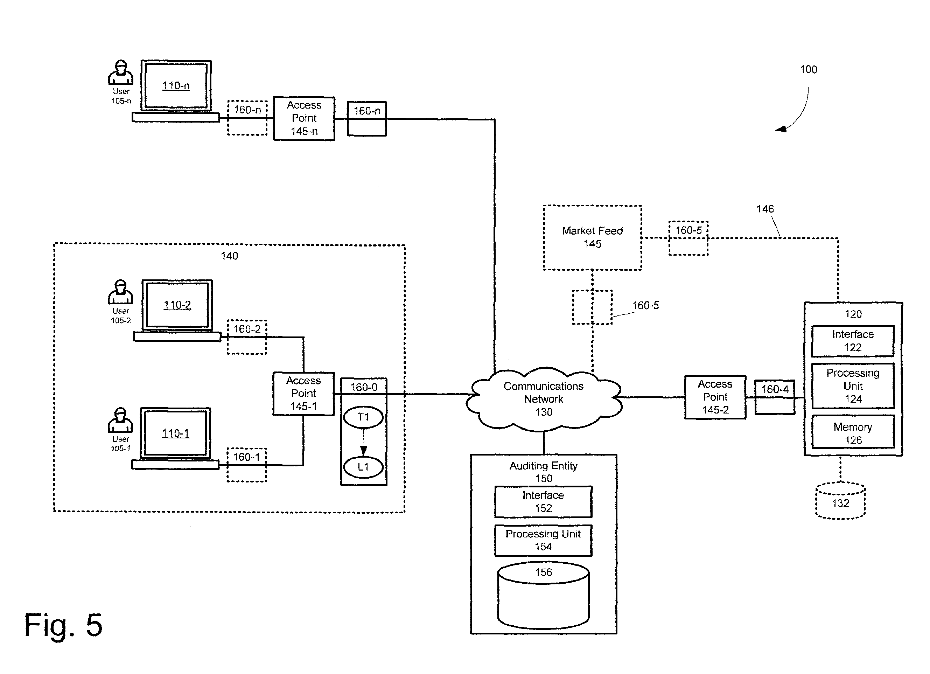

If it is determined at step 330 that the embedded data is to be acquired, then at step 340 at least a portion of the embedded data including, but not limited to the transaction data T1, is converted to loggable data, as exemplified in Figure 5 (which is substantially similar to Figure 1 with like elements depicted with like numbers), the loggable data being represented by the oval L1. It will be recalled that, in the prior art, auditing software installed at the electronic device 110 is configured to convert transaction data to loggable data, the loggable data being in a format that is processable by the auditing entity 150. Similarly, at step 340 at least a portion of the transaction data is converted to loggable data by placing the at least a portion of the transaction data into a loggable data format processable by the auditing entity 150. The loggable data format may be stored at a strategy module 237. In the event that multiple loggable data formats are desired (for example, if the apparatus 160 is later to transmit the loggable data to different auditing entities each requiring different format), different loggable data formats may be stored within a specific strategy module 237, or different strategy modules 237 as desired. Further, if different loggable data formats are desired based on the type of security being traded and/or the exchange and/or the regulator, the different loggable data formats may also be stored in the same or different strategy modules 237 as desired.

In particular, the loggable data further generally comprises a time stamp which indicates a date and time associated with the loggable data. The time stamp enables the auditing entity 150 (and the like) to reconstruct the time, date and circumstances of a transaction, by placing a transaction, and any associated communications, into a general time line.

In some embodiments, the transaction data T1 may comprise the date and time that the transaction data T1 was created at the electronic device 110 (or the transaction engine 120). In these embodiments, the time stamp may be determined by processing the transaction data T1.

In other embodiments, the network data ND1 comprises a date and time that the network data ND1 was transmitted by the electronic device 110 and/or the transaction engine 120, for example within the header data. In these embodiments, the time stamp may be determined by processing the copy of the network data ND1(C). Subsequently, the date and time is placed into the loggable data format and within the loggable data as the time stamp.

In various embodiments, the process of determining the time stamp may be performed at step 315, step 320, step 330, concurrent with processing the copy of the network data ND1(C), extracting the embedded data and/or processing the embedded data, respectively.

In embodiments where the apparatus 160 comprises the clock 238, the time stamp may be determined by requesting the current date and time from the clock 238, and converting the current date and time received from the clock 238 into a loggable data format.

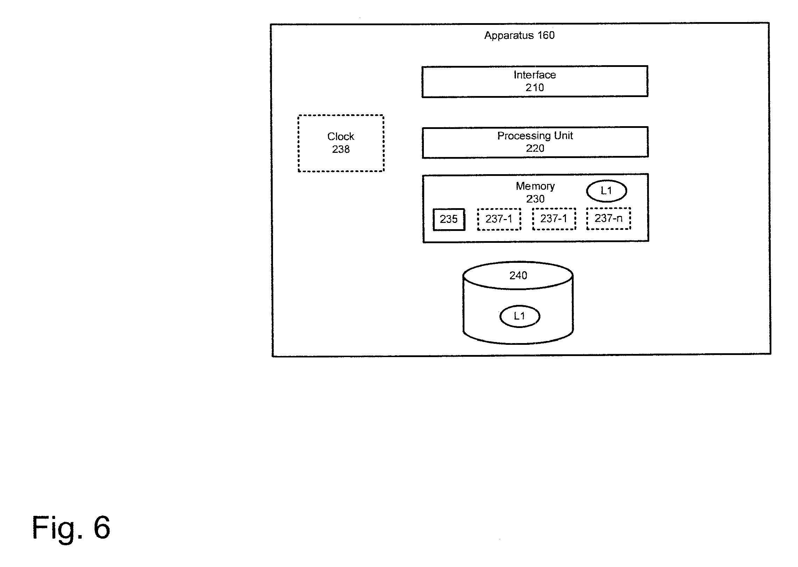

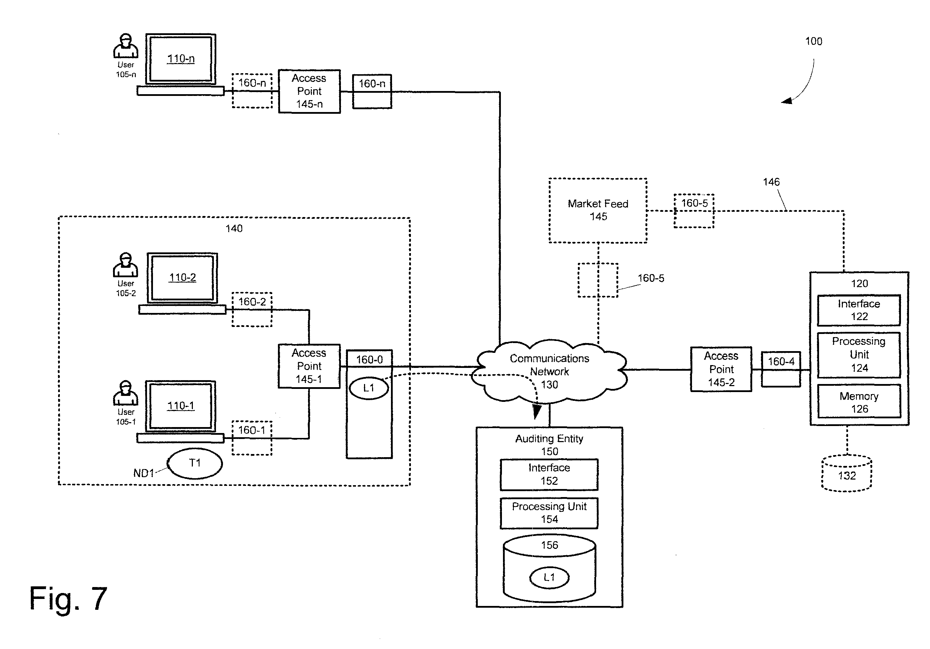

At step 350 the loggable data is output into a machine readable format. For example, the loggable data may be stored within the memory 230, or the optional database 240, as exemplified in Figure 6 (substantially similar to Figure 3, with like elements represented with like numbers). Alternatively, the loggable data may be transmitted to the auditing entity 150, via the communications network 130, as exemplified in Figure 7 (substantially similar to Figure 3, with like elements represented with like numbers).

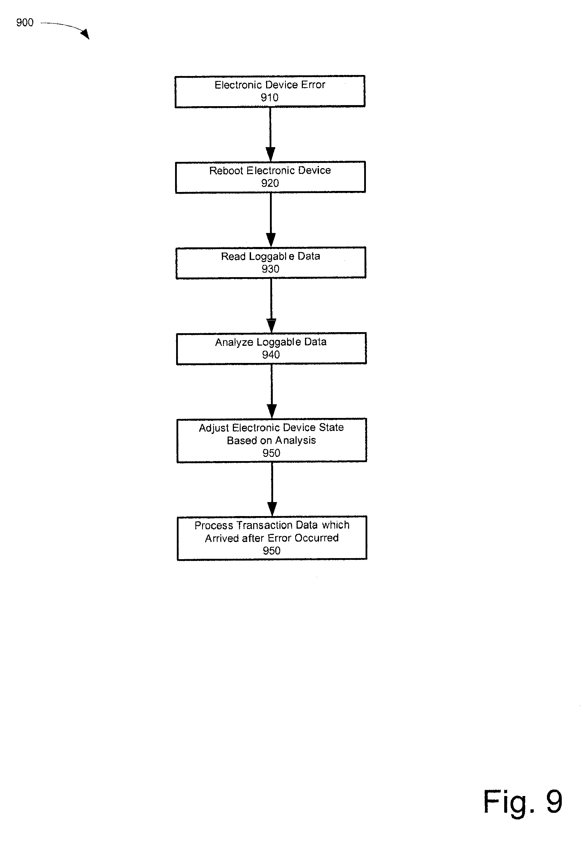

In any event, the loggable data is output into a machine readable format, such that the loggable data may be analyzed, for example for auditing transactions initiated at the electronic device 110. In embodiments where the loggable data is transmitted to the auditing entity 150, the auditing entity 150 is enabled to reconstruct the circumstances of a transaction based on the loggable data. In general, the origin of the loggable data is immaterial to the auditing entity 150 as long as the loggable data is in the expected pre-determined format. Hence, by providing an apparatus 160 that is enabled to acquire network data, convert the network data to loggable data, and output the loggable data in a machine readable format, the loggable data in a format that is at least similar to the format of loggable data provided by the auditing software of the prior art, latency of transactions introduced by the auditing software is reduced and/or eliminated. Hence, the method 300, the apparatus 160 and/or the system 100 provides for low latency acquisition of data, which may also be used for recoverability, for example see Figure 9, described below.

Returning now to Figure 1, while it is understood that in some non-limiting embodiments, an apparatus 160 may be provided in association with a firm (e.g. apparatus 160-0 associated with the firm 140), it is further understood that in other non-limiting embodiments, an apparatus 160 may be provided at any point in the system 100 where acquisition of loggable data is desired. For example, in another non-limiting embodiment, an apparatus 160 may be provided in association with an electronic device 110 (e.g. the apparatus 160-1 in association with the electronic device 110-1, the apparatus 160-2 in association with the electronic device 110-2, and/or the apparatus 160-n in association with the electronic device 110-n). In another non-limiting embodiment, an apparatus 160 may be provided in association with an access point 145 (e.g. the apparatus 160-n in association with the access point 145-n).

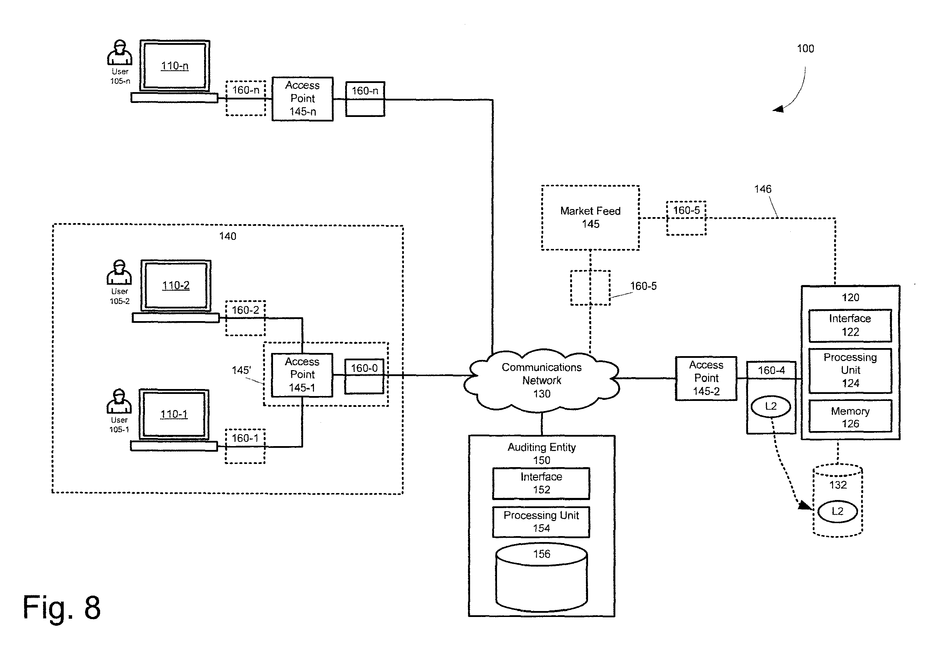

In yet another non-limiting embodiment, an apparatus 160 may be provided in association with the transaction engine 120, for example the apparatus 160-4. As depicted in Figure 8 (substantially similar to Figure 1 with like elements depicted with like numbers), the apparatus 160-4 is configured to acquire network data associated with the transaction engine 120 and process the network data into loggable data, as in the method 300, the loggable data represented in Figure 8 as an oval L2. In these embodiments, loggable data output from the apparatus 160-4 may be output to the transaction engine 120, the transaction engine 120 enabled to store the loggable data at the database 132. Alternatively, the loggable data output from the apparatus 160-4 may be transmitted to the database 132 without first transmitting it to the transaction engine 120. In any event, the loggable data output from the apparatus 160-4 is stored at the database 132.

In some of these embodiments, the apparatus 160-4 is further enabled to acquire network data associated with the market feed 145, and output loggable data comprising market feed data. In yet another non-limiting embodiment, an apparatus 160 may be provided in association with the market feed 145, for example the apparatus 160-5 which is enabled to output loggable data comprising market feed data, including but limited to BBOs and requests for BBOs, for storage at the database 132.

Hence, the loggable data stored at the database 132 represents a log of transactions that occurred at the transaction engine 120, including but not limited to buy orders, sell orders, best bid-offers, confirmation that transactions occurred or did not occur, communications associated with transactions, and the like. The loggable data further comprises a time stamp, as described above, such that the activity at the transaction engine 120 may be reconstructed by processing the loggable data stored at the database 132. Hence, in the event of a failure of the transaction engine 120, the state of the transaction engine 120 may be reproduced and/or restored by processing the loggable data stored at the database 132.

Attention is now directed to Figure 9, which depicts a method 900 of adjusting the state of an electronic device. In order to assist in the explanation of the method 400, it will be assumed that the method 900 is performed using the system 100. Furthermore, the following discussion of the method 900 will lead to a further understanding of the system 100 and its various components. However, it is to be understood that the system 100 and/or the method 900 can be varied, and need not work exactly as discussed herein in conjunction with each other, and that such variations are within the scope of present embodiments. While exemplary embodiments will be described with regards to the electronic device of method 900 being the transaction engine 120, it is understood that the method 900 may equally be applied to adjusting the state of the electronic device 110, or any other electronic device for which loggable data has been stored.

At step 910 an error occurs such that the transaction engine 120 is no longer able to process transactions. For example, as is known to one of skill in the art, the transaction 120 may encounter a machine error, a computing error etc. In general, a person of skill in the art would further understand that one process of recovering from such an error is to reboot the transaction engine 120. In the financial service industry, such an error and subsequent reboot can be particularly problematic, as if the transaction engine 120 comprises an electronic stock exchange engine, the state of the transaction engine 120 is generally non-deterministic: in other words, the order that transactions are processed, as well as the acquisition of BBOs are critical to the state of the transaction engine 120 as well as the processing of the transactions. Further, the restoration of the transaction engine 120 to the exact state it was in at the time of failure is further important to ensuring that commerce proceeds in an orderly fashion, and that the results of transactions be achieved. Fortunately, the loggable data stored at the database 132 represents a state of the transaction engine 120 at the time the error occurred.

Hence, at step 930 the loggable data is read from the database 132, for example, by transmitting a read loggable data request from the transaction engine 120 to the database 132, and receiving the loggable data stored at the database 132 in response, via the interface 122.

At step 940, the loggable data is analyzed to determine the order and result of transactions which occurred at the transaction engine 120 prior to the error occurring, for example the data and time of buy orders, sell orders, BBOs, transaction confirmations etc. Hence, at step 950 the state of the transaction engine 120 may be adjusted from the current state to the state of the transaction engine 120 at the time of the error, and hence continue to process transactions.

In some instances, the loggable data stored at the database 132 may further comprise transaction data which arrived at the apparatus 160-4 after the error occurred, and hence has not yet been processed. At step 950, such transaction data may be processed as if the transaction data had arrived at the transaction engine 120 at the time the loggable data was stored at the database 132, as determined by the time stamp. Alternatively, the processing of such transactions may be regulated by a regulatory agency, and hence transaction data may be processed according to policies dictated by such a regulatory agency. For example, the transaction data may be processed as if the transactions data arrived at the transaction engine 120 at the time the state of the transaction engine 120 was adjusted.

Those skilled in the art will appreciate that in some embodiments, the functionality of the apparatus 160 may be implemented using pre-programmed hardware or firmware elements (e.g., application specific integrated circuits (ASICs), electrically erasable programmable read-only memories (EEPROMs), Field Programmable Gate Arrays (FPGAs), etc.), or other related components. In other embodiments, the functionality of the apparatus 160 may be achieved using a computing apparatus that has access to a code memory (not shown) which stores computer-readable program code for operation of the computing apparatus. The computer-readable program code could be stored on a medium which is fixed, tangible and readable directly by these components, (e.g., removable diskette, CD-ROM, ROM, fixed disk, USB drive), or the computer-readable program code could be stored remotely but transmittable to these components via a modem or other interface device connected to a network (including, without limitation, the Internet) over a transmission medium. The transmission medium may be either a non-wireless medium (e.g., optical or analog communications lines) or a wireless medium (e.g., microwave, infrared, free-space optical or other transmission schemes) or a combination thereof.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method of logging data comprising,
acquiring network data in transmission to a destination;
converting said network data to loggable data; and
outputting said loggable data in a machine readable format.

2. The method of claim 1, wherein said acquiring said network data comprises acquiring packet based data.

3. The method of claim 1 or claim 2, wherein said acquiring said network data comprises acquiring a copy of said network data.

4. The method of any preceding claim, wherein said acquiring said network data comprises at least one of sniffing said network data and acquiring said network data via a mirror port.

5. The method of any preceding claim, further comprising transmitting said network data to an auditing entity prior to said converting said network data to said loggable data.

6. The method of any preceding claim, wherein said converting said network data to said loggable data comprises extracting transaction data from said network data and converting said transaction data to a pre-determined loggable data format.

7. The method of claim 6, wherein said pre-determined loggable data format comprises a data format processable by an auditing entity.

8. The method of claim 7, wherein said auditing entity comprises at least one of an auditing entity associated with an entity originating said network data, and an auditing entity associated with the financial services industry.

9. The method of any preceding claim, wherein said loggable data comprises financial transaction data.

10. The method of any preceding claim, wherein said outputting said loggable data in said machine readable format comprises at least one of saving said loggable data to a computer readable file, and transmitting said loggable data to an auditing entity.

11. The method of any preceding claim, further comprising analyzing said loggable data to adjust an electronic device state.

12. An apparatus for logging data comprising,
a communication interface enabled for acquiring network data; and
a processing unit in communication with said communications interface, said processing unit enabled to perform the method according to any one of claims 1 to 11.

13. A computer program which when executed on an apparatus for logging data carries out the method of any of the preceding method claims.

14. A computer program which when downloaded onto an apparatus causes it to become the apparatus for logging data of claim 12.

15. A communication system including an apparatus for logging data according to claim 12.
